# FASCICULE DE BREVET EUROPEEN

(11) **EP 0 758 511 B1**
(45) Date de publication et mention de la délivrance du brevet: **29.01.2003**
(21) Numéro de dépôt: 95918604.0
(22) Date de dépôt: 25.04.1995
(51) Int. Cl.: H04N 5/28, H04N 5/232

(54) **SYSTEME ET PROCEDE DE TRANSMISSION A HAUTE FREQUENCE DE PRISE DE VUES DE TELEVISION**
VORRICHTUNG UND VERFAHREN ZUR HOCHFREQUENZEN ÜBERTRAGUNG VON FERNSEHBILDERN
HIGH-FREQUENCY TELEVISION PICTURE TRANSMISSION METHOD AND SYSTEM

(30) Priorité: 25.04.1994 FR 9404953
(43) Date de publication de la demande: 19.02.1997
(73) Titulaire: Zwahlen, Laurent, 2012 Auvernier (CH)
(72) Inventeur: ZWAHLEN LAURENT, CH-2012 Auvernier (CH); ZWAHLEN, Milva, CH-2012 Auvernier (CH); SCHAFFER, Rudolf, CH-2306 La Chaux-de-Fonds (CH)
(74) Mandataire: Balsters, Robert
(86) Numéro de dépôt international: EP9501555
(87) Numéro de publication internationale: WO95029556

(56) Documents cités:
- EP-A- 0 188 286
- US-A- 4 091 422
- US-A- 4 943 854
- US-A- 4 977 449
- ACTA ELECTRONICA, vol. 11, no. 4, Octobre 1968 FRANCE, pages 352-360, J. CAYZAC 'équipement portatif de prise de vues de télévision'
- PATENT ABSTRACTS OF JAPAN vol. 14 no. 28 (E-875) ,19 Janvier 1990 & JP,A,01 265673 (HITACHI LTD) 23 Octobre 1989,

## Description

La présente invention concerne un système de transmission à haute fréquence de prises de vues de télévision et plus particulièrement un système de transmission sans fil à haute fréquence (H.F.) d'images de télévision ayant une qualité au moins égale à celle qui est imposée par les normes en vigueur dans les chaînes de télévision et permettant de relier plusieurs caméras mobiles à une station de production, telle qu'un car de production, afin de permettre la réalisation d'un programme de télévision en vue de sa diffusion en direct et/ou de son enregistrement. De plus, le système peut être totalement mobile. Un tel système est décrit par exemple dans le brevet américain US-A-4 091 422.

On connaît de l'article "équipement portatif de prise de vue de télévision" de J. Cayzac, ACTA Electronica, vol. 11, no. 4, Octobre 1968, pages 352-360 un système de transmission sans fil d'images comprenant, d'une part, plusieurs unités de prise de vues comportant chacune une caméra et un module comprenant un récepteur d'ondes hertziennes et un émetteur à haute fréquence pouvant émettre par des ondes hertziennes un signal de prise de vues fourni par ladite caméra vers une unité de régie capable de communiquer avec un réseau de télédiffusion pour diffuser en direct et/ou d'enregistrer au moins un desdits signaux et, d'autre part, au moins deux canaux vidéo hertziens permettant chacun la transmission sur une fréquence porteuse prédéterminée d'un signal vidéo représentant un nombre déterminé d'images par seconde, lesdits canaux reliant lesdites unités de prise de vues à l'unité de régie.

Dans de tels systèmes connus de l'art antérieur, un opérateur commande le fonctionnement d'une caméra. La prise de vues est transmise par un canal vidéo hertzien sur une fréquence de transmission mise à disposition par l'autorité concédante vers un point de réception, par exemple un car de production où se trouve le réalisateur du programme de télévision à diffuser en direct et/ou à enregistrer. Dans son car, le réalisateur reçoit sur des moniteurs plusieurs signaux vidéo correspondant aux prises de vues des différentes caméras. Il peut choisir à chaque instant le ou les signaux vidéo à diffuser en direct et/ou à enregistrer. Comme son choix est basé sur les différentes images visualisées sur les moniteurs, il est souhaitable que le réalisateur puisse avoir le plus grand nombre possible d'images à sa disposition, et de préférence celles provenant de toutes les caméras utilisées, de façon à avoir une vision globale des événements et à toujours pouvoir choisir parmi les signaux vidéo correspondant auxdites prises de vues des différentes caméras le ou les signaux vidéo le ou les plus intéressants à diffuser en direct et/ou à enregistrer. Chaque caméra a alors besoin de son propre canal vidéo hertzien qui, dans le cas où la qualité de diffusion en direct et/ou d'enregistrement doit respecter les normes des chaînes de télévision, doit avoir une bande passante de 6 à 8 MHz.

Or, on sait que les bandes de hautes fréquences utilisables pour ce genre de transmission sont déjà très fortement encombrées de sorte que l'autorité concédante ne peut réserver que très peu de fréquences à chaque système de transmission.

Dans le cas où le nombre de caméras souhaité est supérieur au nombre de fréquences allouées, il est évident que de nombreuses opérations supplémentaires sont indispensables. De plus, comme chaque caméra ne dispose donc pas de son propre canal vidéo hertzien pour transmettre sa prise de vues, cette méthode de travail ne permet bien évidemment pas une utilisation et une visualisation simultanée dans le car de production où se trouve le réalisateur de toutes les prises de vues des différentes caméras. Le réalisateur perd ainsi toute vision globale des événements, ce qui constitue un énorme handicap pour lui. Ces opérations supplémentaires peuvent donc entraîner une surcharge de travail, des pertes d'informations, etc....

Il est également connu du brevet américain US-A-4 943 854 un système de vidéo surveillance qui permet un multiplexage des différentes images fournies par les unités de prise de vues. Toutefois, ici la qualité d'images n'est pas très important, car il suffit de pouvoir reconnaître les endroits surveillés, et la vitesse de changement des images est en général relativement basse en comparaison avec une émission en direct. De plus, ce brevet ne mentionne nullement la possibilité de transmettre les images par des ondes hertziennes. Ainsi, les exigences d'un tel système sont complètement différentes de celles de la présente invention qui vise une qualité très élevée avec une utilisation minimale du spectre des fréquences disponibles.

Ainsi, les émetteurs des caméras H.F., qui ne peuvent pas être visualisées, polluent en fait le spectre de fréquences, parce qu'ils continuent généralement à fonctionner pour que le passage d'une caméra à l'autre puisse être effectué rapidement. Or, il n'y a que quelques fréquences disponibles justement pour éviter une pollution du spectre. Il est donc indispensable d'éviter de tels émetteurs parasites. Les systèmes de l'art antérieur utilisent souvent simplement une gestion des temps morts qui détermine un délai d'extinction de la caméra. Pendant tout ce temps mort, qui peut durer par exemple plusieurs secondes ou minutes, il y a pollution, du spectre. Comme la fréquence utilisée n'est pas libérée, une utilisation efficace de cette fréquence occupée n'est donc pas possible pendant tout ce temps mort avec un tel système. De plus, si par exemple la caméra sort du champ de réception du signal de commande ou entre dans un tunnel et ne peut plus capter ce signal de commande, son émetteur H.F. continue à émettre pendant ce temps mort tout en polluant le spectre des fréquences.

Ces inconvénients limitent évidemment l'utilisation de ces systèmes de transmission H.F. de l'art antérieur, alors que l'évolution des méthodes de travail des chaînes de télévision ainsi que les demandes toujours croissantes des téléspectateurs pour des programmes de télévision diffusés en direct et/ou en léger différé après enregistrement (sport, manifestations, etc) favoriseraient justement l'utilisation de tels systèmes H.F..

En effet, la réalisation d'un programme de télévision couvrant une course de ski alpin ou une compétition de golf nécessite l'installation d'un grand nombre de caméras tout au long du parcours, ce qui n'est pas toujours facile à réaliser et demande souvent beaucoup de temps. En effet, pour chaque caméra, il faut normalement installer un câble entre la caméra et le car ou la station de production. Bien qu'il soit connu d'utiliser un système de transmission en multiplexage par câble des images de prises de vue tel que décrit dans le document EP-B-0 188 286, un tel système nécessite toujours l'installation d'un câble entre ses moyens de transmission des signaux d'images provenant des caméras et la station de réception de ces signaux. A cause des grandes longueurs de câbles à tirer les temps d'installation et de démontage sont par conséquent longs et nécessitent en général également l'immobilisation de plusieurs éléments de production pour la même durée, alors que le programme réalisé ne dure que quelques heures. De plus, la qualité d'image est un facteur essentiel dans le domaine de transmission des images à qualité de diffusion, contrairement au domaine de surveillance auquel s'applique l'objet du document EP-B-0 188 286 cité ci-dessus. On comprend ainsi que les méthodes de compression nécessaires des signaux décrites dans ce document ne sont pas toujours acceptées par les techniciens du domaine de transmission pour la diffusion.

Par ailleurs, la production d'une course cycliste nécessite l'installation de plusieurs caméras mobiles équipées d'un système de transmission H.F. des images et réparties sur des motos et dans des hélicoptères. Evidemment, l'utilisation d'un ou plusieurs câbles n'est pas possible ici.

En raison des inconvénients des systèmes H.F. tels que décrits ci-dessus, la transmission des images des différentes caméras nécessite de nombreux opérateurs et du matériel complémentaire de commutation de façon à n'utiliser que le nombre limité de fréquences allouées, ce qui augmente sensiblement les "coûts techniques de production".

Un but de la présente invention est d'apporter une solution à ces inconvénients en présentant un système qui permet de transmettre sans fil et avec une qualité d'images de télédiffusion les prises de vues d'un grand nombre de caméras fixes et/ou mobiles à une unité de régie en n'utilisant qu'un nombre très limité de canaux vidéo hertziens, donc de fréquences, mais tout en assurant une utilisation et une visualisation globale dans l'unité de régie de toutes les prises de vues des caméras. Cette transmission peut se faire soit de manière directe soit par l'intermédiaire d'un ou plusieurs relais, par exemple si la topographie de la région où se trouve le système l'exige. De plus, il faut éviter une occupation inutile du spectre des fréquences par des émetteurs non utilisés.

Ce but est atteint grâce aux caractéristiques de la revendication 1.

Un autre but de la présente invention est de fournir un procédé de transmission de prises de vues utilisant le système selon l'invention.

Ce but est atteint grâce aux caractéristiques de la revendication 4.

Afin de mieux comprendre l'invention, il convient de connaître le principe d'une image télévisée. Une caméra de télévision fournit une série d'images télévisées, chaque image étant formée de deux trames entrelacées. Un signal télévisé consiste en une suite d'images transmises successivement à raison de 25 ou 30 par seconde. Ce nombre d'images dépend pour des raisons pratiques, de la fréquence de la tension du réseau d'alimentation utilisé. Comme en Europe le réseau est à 50 Hz, on transmet 50 trames par seconde, soit 25 images par seconde (la fréquence du réseau étant de 60 Hz aux Etats-Unis, on transmet 60 trames par seconde, soit 30 images par seconde).

Comme cela sera rendu évident plus loin, le système et le procédé selon l'invention permettent d'obtenir une diminution importante des coûts d'utilisation par rapport aux systèmes actuels et offrent la possibilité d'utiliser un nombre de caméras mobiles nettement plus grand travaillant avec peu de fréquences. Grâce à sa grande flexibilité, ce nouveau système permet donc également d'élargir le champ d'exploitation de la transmission sans fil d'images par système H.F..

On va décrire ci-après, à titre d'exemple uniquement, plusieurs modes de réalisation de l'objet de l'invention en se référant aux dessins annexés, dans lesquels:
- la figure 1 représente schématiquement un système selon l'invention avec ses principaux composants et leurs interconnexions,
- la figure 1a représente schématiquement plus en détail l'équipement à installer dans une unité de régie,
- la figure 1b représente schématiquement un sélecteur dans l'unité de régie du système selon l'invention,
- les figures 2a, b, c, d et e représentent schématiquement plusieurs variantes possibles de signaux vidéo transmis par les canaux vidéo reliant les caméras à l'unité de régie du système selon l'invention,
- la figure 2f représente schématiquement un signal radio de commande agissant sur les caméras du système selon l'invention.
- la figure 3 représente schématiquement plus en détail les signaux émis par les caméras dans le cas correspondant aux figures 2a et 2b, et
- la figure 4 représente un exemple d'une configuration pratique réalisable avec le système selon l'invention.

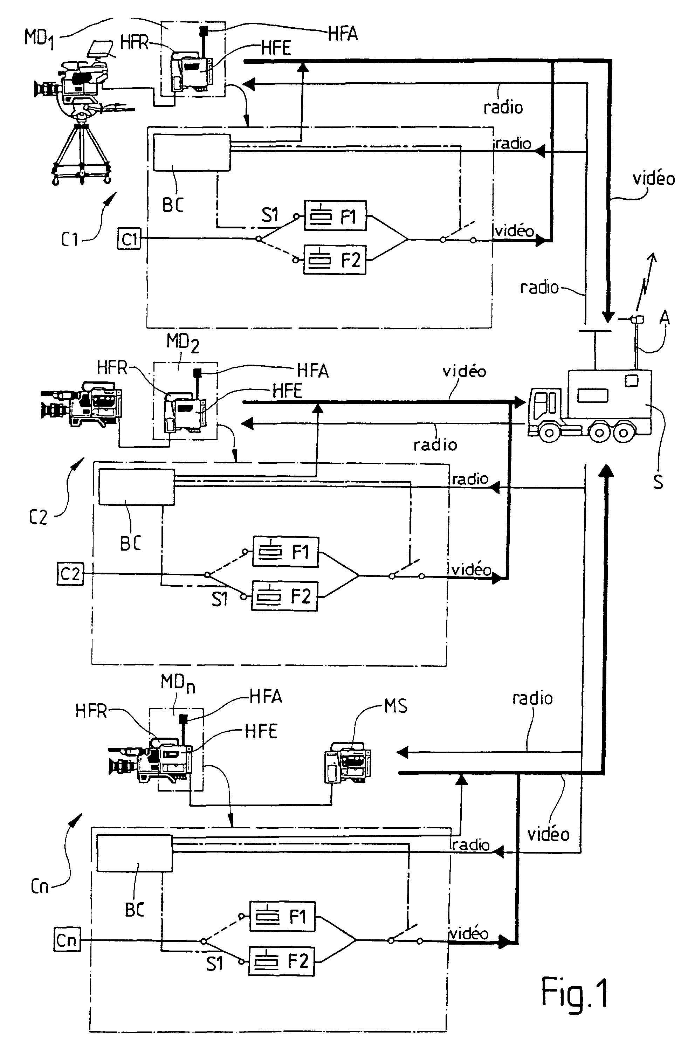

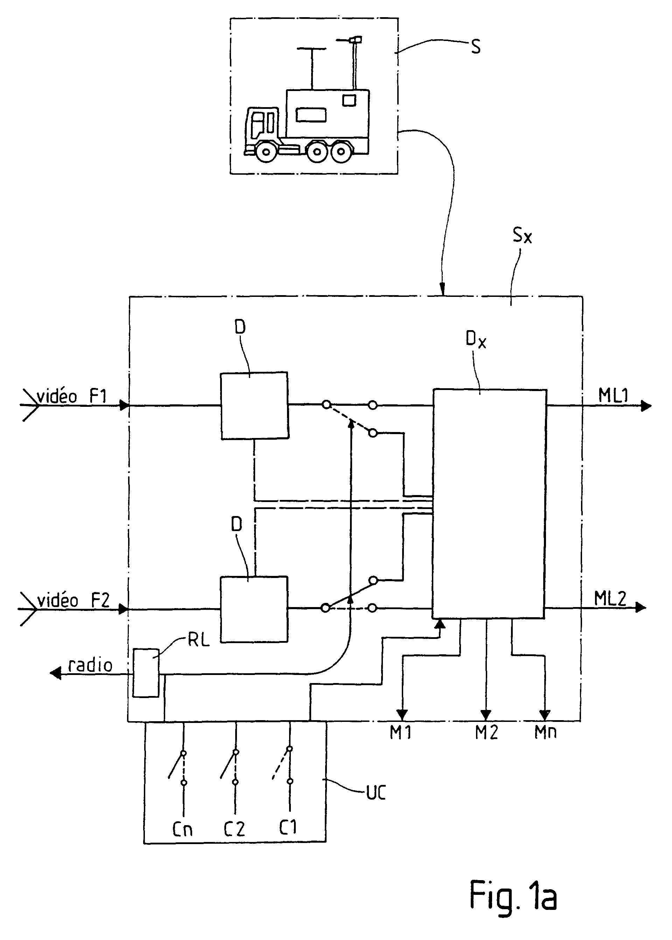

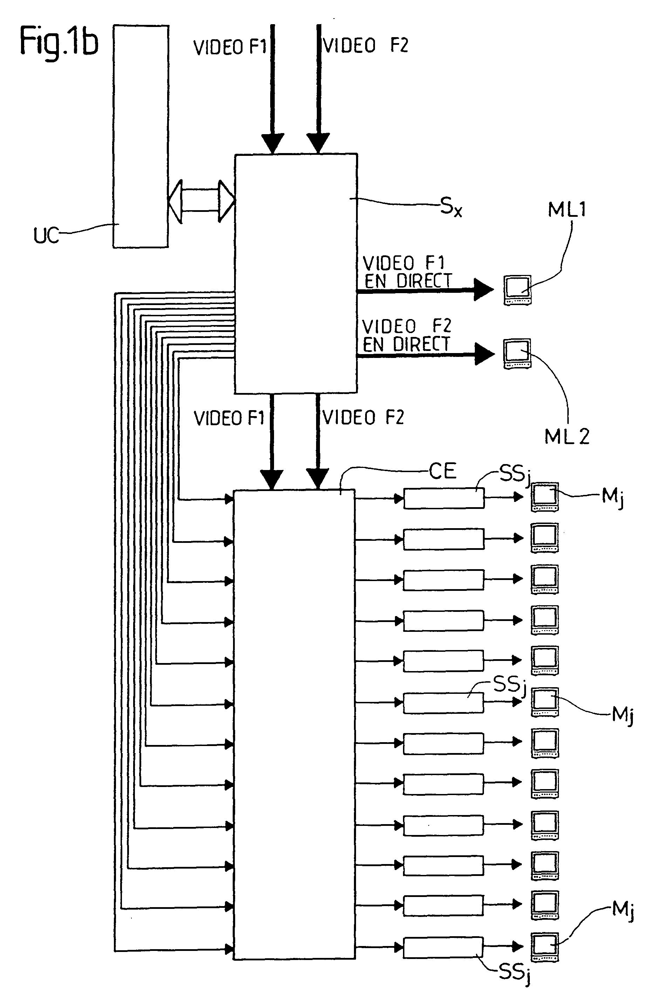

La figure 1 représente schématiquement un système H.F. de transmission de prises de vues de télévision selon l'invention avec ses principaux composants et leurs interconnexions. Ce système comprend plusieurs unités de prise de vues Cᵢ (i= 1,2, ...n), comportant chacune une caméra et un module MDᵢ comprenant un récepteur radio HFR et un émetteur à haute fréquence HFE, associé à une antenne HFA, pouvant émettre par des ondes hertziennes le signal de prise de vues fourni par ladite caméra. Dans la suite du texte ces unités de prise de vues seront simplement désignées par le terme "caméra" pour faciliter la compréhension. Chaque caméra Cᵢ peut être par exemple mobile ou rester à demeure à un endroit donné, ou encore être héliportée, et suit le déroulement d'un événement dont on souhaite faire un reportage télédiffusé en direct et/ou un enregistrement.

Chaque caméra Cᵢ transmet ses prises de vues par son émetteur HFE, au moyen d'ondes hertziennes, vers une unité de régie S, dite aussi studio ou station de production, qui peut être par exemple un car de production ou toute autre installation fixe ou mobile, capable de communiquer via une antenne A avec un réseau de télédiffusion terrestre directement ou par l'intermédiaire d'un satellite et/ou capable d'enregistrer. Avantageusement les caméras peuvent être utilisées pour les émissions exigeant une qualité d'image compatible avec la télédiffusion sur des grandes chaînes publiques ou privées.

Ainsi, l'exemple montre une première caméra fixe C₁. Bien entendu, chaque caméra peut encore être équipée d'un magnétoscope intégré; une telle caméra connue par exemple sous la désignation "Camcorder" est référencée C₂ dans la figure 1. Une troisième caméra comportant son émetteur et reliée à un magnétoscope MS, est référencée Cₙ à la figure 1.

Chaque module MDᵢ comprend donc entre autres un émetteur d'ondes hertziennes HFE et une antenne HFA pour rayonner les ondes hertziennes, comportant entre autres les informations du signal vidéo.

L'émetteur HFE transmet plusieurs signaux sur un canal mis à disposition par l'autorité concédante, par exemple un canal de 6 à 8 MHz centré sur une fréquence de 2,3 GHz par exemple. Ces signaux peuvent être un signal vidéo, un ou plusieurs signaux audio destinés à fournir un son mono ou stéréo par exemple un bruit ambiant, une conversation, etc., ainsi que d'autres genres de signaux tels que par exemple ceux nécessaires à une transmission numérique d'information.

Chaque module MDᵢ comprend également une boîte de commande BC associée à un récepteur radio, dit récepteur de signaux radio de commandes HFR pour adapter le fonctionnement de la caméra et d'accessoires éventuels aux besoins du système H.F. selon l'invention. Cette boîte de commande BC reçoit des signaux de commande, référencés radio à la figure 1, émis par l'unité de régie ou station de production S et destinés pour gérer le fonctionnement du module MDᵢ ainsi que la mise en marche ou l'arrêt de l'émetteur HFE et si nécessaire des fonctions de la caméra proprement dite ainsi que d'éventuels accessoires. De plus, ce signal radio de commande donne des instructions à la boîte de commande BC pour commander la fréquence, la puissance et le mode de transmission du signal vidéo par l'émetteur HFE. Le fonctionnement de cette boîte de commande BC sera expliqué plus en détail ci-après.

Le signal vidéo émis par l'émetteur HFE de chaque caméra Cᵢ peut comprendre en outre un signal d'identification de la caméra. Ce signal d'identification peut être ajouté au signal vidéo d'une façon connue, par exemple de la façon utilisée pour ajouter des codes de télétexte sur un signal de télévision. Il s'agit d'une technique connue de l'homme de l'art et elle ne sera donc pas expliquée plus en détail.

La station de production S reçoit les signaux vidéo des caméras Cᵢ. Pour chaque fréquence utilisée par le système selon l'invention, la station de production S comprend un récepteur qui est intégré dans un décodeur D de signaux vidéo (voir la figure la) . La station S comprend en outre une unité de commande UC pour gérer le fonctionnement du système. L'unité de commande UC est entre autre utilisée par le réalisateur pour sélectionner la caméra dont les images vont être utilisées pour la transmission en direct et/ou l'enregistrement. A cet effet, l'unité de commande UC génère un signal radio de commande, de façon à informer chaque caméra du mode de fonctionnement souhaité à un instant donné. Pour cela, l'unité de commande UC est associée à des moyens RL pour établir une liaison par ondes hertziennes, référencée radio à la figure 1.

Bien entendu, l'unité de commande UC peut être programmée à l'avance, par exemple au moyen d'un ordinateur, et commande et contrôle au travers des moyens RL les boîtes de commandes BC (voir figure 1) des caméras Cᵢ selon le fonctionnement souhaité du système.

Le système est configuré de manière qu'en l'absence d'un signal de commande, les émetteurs HFE soient mis automatiquement hors fonctionnement ou en mode de veille. Lorsque cela est nécessaire, l'unité de commande UC remet en marche ou confirme la mise en marche et commande chaque émetteur au moyen du signal de commande.

Ainsi, le réalisateur peut choisir la caméra "en direct" en sélectionnant cette caméra sur un clavier associé à l'unité de commande UC. Ce choix génère une commande transmise via la liaison RL à toutes les caméras du système.

Avantageusement, une commande de synchronisation peut être transmise par la liaison RL vers les caméras leur permettant de synchroniser leur signal de sortie avec les signaux de sortie des autres caméras. De plus, chaque caméra est équipée d'une unité d'asservissement lui permettant de synchroniser son signal de sortie avec le signal radio de commande transmis par la station S, et ce chaque fois que le système envoie un signal de commande vers les différentes caméras. Cette unité d'asservissement peut être incorporée dans le récepteur de signaux de commande HFR.

Dans le mode de réalisation de l'invention donné à titre d'exemple (voir figure 1a), le système utilise deux signaux vidéo associés à deux fréquences différentes F1 et F2, dites respectivement fréquence en direct et fréquence de contrôle. Par fréquence de contrôle, on entend une fréquence utilisée pour la transmission des signaux de prises de vues des caméras qui ne sont pas "en direct". Bien entendu, s'il y a plus que deux fréquences allouées par l'autorité concédante, une ou plusieurs fréquences peuvent être utilisées pour la transmission en direct et/ou de contrôle.

Dans l'exemple, les deux fréquences transmettent entre autre les images venant de n antennes HFA reliées aux caméras vers la station de production S. Les signaux arrivent à la station S dans un sélecteur Sₓ. Le sélecteur Sₓ comprend en outre des décodeurs D qui discriminent les signaux vidéo, les signaux audio et/ou les codes d'identification. Le premier signal vidéo, associé à la fréquence F1, peut être le signal reçu de la caméra Cᵢ qui sera diffusé en direct et/ou enregistré tandis que l'autre signal vidéo, associé à la fréquence F2, est formé par les images des autres caméras Cⱼ qui sont combinées par multiplexage. En d'autres termes, les signaux vidéo formés par les images venant des autres caméras Cⱼ sont successivement transmis sur le canal de fréquence F2, par exemple de la façon décrite dans le document EP-B-0 0188 286 cité ci-dessus. A cet effet, les caméras comportent chacune un commutateur, désignés par Si dans la figure 1, qui est commandé par le signal de commande transmis par la liaison radio. Dans la configuration représentée à titre d'exemple sur la figure 1, c'est la caméra C₁ qui transmet sur la fréquence F1, tandis que les autres caméras C₂ à Cₙ transmettent en images successives réparties dans le temps, sur la fréquence F2.

Le sélecteur Sₓ de la station S comprend en outre un démultiplexeur Dₓ qui peut sélectionner les signaux vidéo reçus dans la station S en vue de leur acheminement souhaité.

Quand les signaux vidéo arrivent à la station de production S, le démultiplexeur Dₓ sélectionne et achemine chaque signal vidéo vers un moniteur M1, M2, ..., Mn qui permet de voir les images prises par la caméra correspondante. Chaque caméra Cᵢ a donc un moniteur Mᵢ pour visualiser son signal vidéo. Ainsi le réalisateur peut suivre toutes les prises de vues et choisir celle qui sera diffusée en direct et/ou enregistrée. Il peut alors faire son choix sur la base d'une vision globale des événements. L'unité de commande UC fonctionne donc comme l'interface entre le réalisateur et le système selon l'invention.

Avantageusement, deux moniteurs supplémentaires ML1, ML2 destinés à visualiser directement les signaux émis sur les fréquences F1 et F2, sont branchés à la sortie du démultiplexeur Dₓ. Ces moniteurs sont donc assignés directement aux fréquences disponibles. Bien entendu, les fréquences utilisées pour transmettre le signal en direct et le signal de contrôle sont interchangeables, car l'unité de contrôle UC peut commander par la liaison RL la position des commutateurs S1

Dans l'exemple décrit, le signal en direct est fourni par la caméra C₁. Ce signal est transmis sur la fréquence F1 et est ainsi directement visualisé par le moniteur ML1. Ce signal est également acheminé vers le moniteur Mi assigné à la caméra Cᵢ (ici donc M₁ pour C₁). Le deuxième signal qui arrive à la station de production S, et qui comprend le signal multiplexé, est transmis sur la fréquence F2. Ce signal est ensuite démultiplexé afin d'acheminer chaque image Iⱼ venant de chaque caméra Cⱼ vers le moniteur Mj qui lui est assigné.

Un circuit électronique CE (voir figure 1b) est prévu qui est branché entre la sortie du sélecteur Sₓ et chaque moniteur Mj. Le circuit électronique CE introduit l'image Iⱼ reçue dans un registre d'image SSⱼ permettant de mémoriser l'image Iⱼ.

En effet, dans le cas où il y a un nombre n de caméras, les images provenant de (n-1) caméras sont incorporées dans le signal multiplexé. L'image provenant de chaque caméra sera donc réécrite, selon les normes européennes, toutes les ((n-1)/25) secondes. Cette image visualisée change donc chaque fois qu'elle est réécrite (ou rafraîchie).

On comprend que le nombre de caméras pouvant être utilisées avec le système selon l'invention soit limité uniquement par le temps de rafraîchissement maximum considéré comme acceptable par le réalisateur.

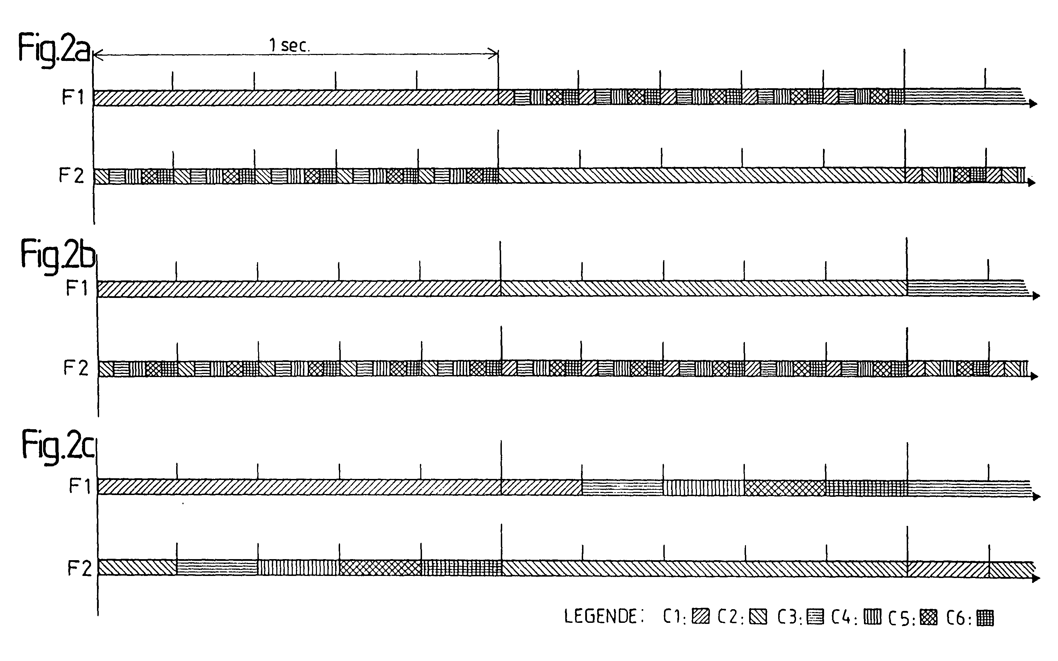

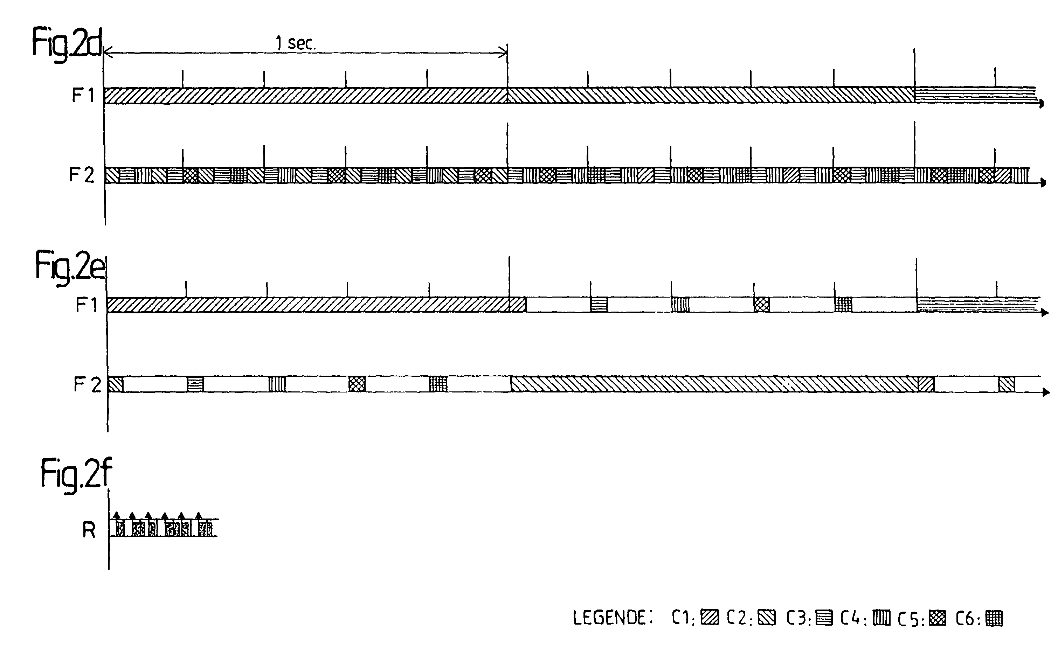

Le fonctionnement du système selon l'invention sera maintenant expliqué par l'examen de différentes possibilités de transmission des images représentées sur les figures 2a à 2e.

Ces figures représentent schématiquement plusieurs variantes possibles de signaux vidéo transmis par les canaux vidéo sur deux fréquences disponibles avec le système selon l'invention, à savoir une fréquence en direct et une fréquence de contrôle, ces canaux reliant dans ces exemples six caméras C1 à C6 à la station de production S. L'exemple est conforme aux normes européennes comprenant 25 images par seconde.

A la figure 2a, on voit que pendant une première unité de temps (par exemple une seconde), le réalisateur a sélectionné la caméra C1 en tant que caméra "en direct" sur la fréquence F1. Les autres caméras reçoivent donc de l'unité de commande UC un signal de commande de transmission de leurs images selon un partage dans le temps, la transmission se faisant sur la fréquence F2, dite fréquence de contrôle. Ainsi, la caméra C₁ transmet en direct sur la fréquence F1, tandis que les cinq autres caméras C₂ à C₆ transmettent chacune une image une fois tous les cinquièmes de seconde sur la fréquence F2. Pendant la première seconde le signal transmis sur la fréquence F2 est donc composé par les signaux successifs des caméras, comme suit :
C2 C3 C4 C5 C6 C2 C3 C4 C5 C6 C2 C3 C4 C5 C6
C2 C3 C4 C5 C6 C2 C3 C4 C5 C6.

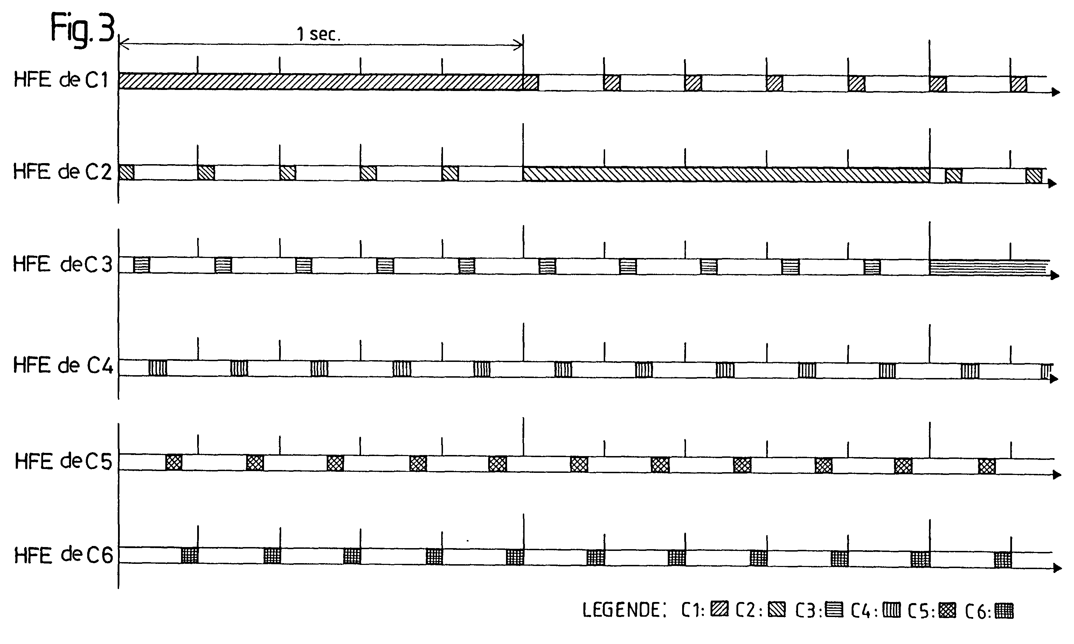

La figure 3 montre pour l'exemple de la figure 2a les activités des émetteurs HFE de chaque caméra.

Ainsi, la séquence des signaux multiplexés transmis sur la fréquence F2 se répète cinq fois par seconde, étant entendu qu'il y aura d'abord une première image d'une durée de 1/25 de seconde provenant de la caméra C2, suivie par une première image de la caméra C3 de même durée, et ainsi de suite jusqu'à l'image de la caméra C6. Puis, la même séquence d'une durée de 5/25 de seconde se répète.

Dans l'exemple considéré, après un certain temps, ici une seconde, le réalisateur sélectionne une autre caméra, la caméra C2, en tant que prochaine caméra "en direct". Cette caméra continue, dans cet exemple, à transmettre sur la fréquence F2, mais maintenant en direct. Par conséquent, seuls les commutateurs S1 affectés à commander la fréquence de transmission des caméras C₁ et C₂ ne changent pas de position. Le signal vidéo multiplexé transmis sur la fréquence F1 comporte les signaux des caméras selon le cycle suivant :
C1 C3 C4 C5 C6 C1 C2 C3 C4 C5 C6 C1 C3 C4 C5 C6
C1 C3 C4 C5 C6 C1 C3 C4 C5 C6.

Encore une seconde plus tard, le réalisateur préfère la prise de vues venant de la caméra C3. Les images transmises par cette caméra C3 continuent avantageusement à être transmises sur la fréquence F1. La fréquence F2, qui devient alors la fréquence de contrôle, sert ainsi à transmettre la série cyclique suivante :
C1 C2 C4 C5 C6 C1 C2 C4 C5 C6 C1 C2 C4 C5 C6 etc..

Toutefois, il est possible que le réalisateur préfère garder le canal transmettant les images de la caméra "en direct" sur la même fréquence porteuse, car ainsi il est sûr que cette fréquence fonctionne correctement. En effet, sur le moniteur ML1 montrant le signal en direct, le réalisateur peut voir si la qualité de la transmission faite sur la fréquence F1 est bonne, tandis que la qualité de la transmission faite sur l'autre fréquence F2 est plus difficile à juger. Dans ce cas, seuls les commutateurs S₁ affectés à la sélection de la fréquence des caméras C₁ et C₂ (figure 1) changent de position. La figure 2b représente cette variante. Dans ce cas, on a choisi les mêmes caméras que dans la variante selon la figure 2a, les caméras transmettant les mêmes signaux (voir aussi la figure 3) et ce dans le même ordre qu'à la figure 2a. Cependant, la fréquence F1 sert toujours à la transmission du signal de la caméra "en direct". Par conséquent, dans ce cas, la fréquence F2 reste la fréquence de contrôle et sert à transmettre les images réparties dans le temps venant des autres caméras.

Si l'émission à suivre est plus statique, le réalisateur peut choisir un temps de rafraîchissement entre chaque caméra plus grand que dans le cas des figures 2a et 2b. La figure 2c montre cette variante. Cet exemple ressemble à celui de la figure 2a sauf pour ce qui concerne le temps de rafraîchissement et de transmission des images multiplexées. Le signal vidéo transmis sur la fréquence de contrôle F2 est alors composé par le cycle suivant :
C2 C2 C2 C2 C2 C3 C3 C3 C3 C3 C4 C4 C4 C4 C4
C5 C5 C5 C5 C5 C6 C6 C6 C6 C6,
c'est-à-dire que chaque caméra transmet cycliquement cinq images successives.

On comprend ainsi que les émetteurs des caméras peuvent émettre pendant une durée variable commandée par le signal radio de commande.

Par conséquent, le temps de rafraîchissement peut donc être différent pour les différentes caméras. Ceci peut être utile par exemple pour la réalisation d'un programme de télévision couvrant une descente de ski alpin. Les caméras peuvent alors être au nombre de six par exemple et être installées tout au long de la piste de descente, la caméra C₁ étant placée au point de départ et la caméra C₆ se situant à l'arrivée. Quand le premier participant commence sa descente, la prise de vues de la caméra C₁ est la plus intéressante et elle sera donc transmise en direct. Les prises de vues des caméras C₂ et C₃ sont les plus intéressantes du point de vue de la surveillance, car le skieur va ensuite passer par les endroits où elles sont installées. Ces caméras sont donc à privilégier. Alors que les autres caméras C₄, C₅ et C₆ ne sont pas encore très intéressantes. La figure 2d montre, pour cet exemple, la représentation des images transmises sur les fréquences F1 et F2. La séquence des caméras transmettant sur la fréquence de contrôle F2 sera donc la suivante :
C2 C3 C4 C2 C3 C5 C2 C3 C6 C2 C3 C4 C2 C3 C5
C2 C3 C6, etc.

Pendant la descente, la prise de vues de la deuxième caméra devient plus intéressante. Le réalisateur choisit alors cette caméra C₂ comme caméra "en direct". De plus, il choisit les caméras C₃ et C₄ en tant que caméras à privilégier. La nouvelle séquence des caméras transmettant sur la fréquence de contrôle F2 sera donc la suivante :
C3 C4 C5 C3 C4 C6 C3 C4 C1 C3 C4 C5 C3 C4 C6
C3 C4 C1, etc.

La figure 2e montre un exemple d'un événement statique. Il suffit ici de ne transmettre les images de chaque caméra sur la fréquence de contrôle F2 qu'une fois par seconde. L'image sur le moniteur Mi de chaque caméra Cᵢ de contrôle n'est alors rafraîchie qu'une seule fois par seconde. La caméra C₁ est ici la caméra "en direct". La séquence des caméras produisant le signal vidéo transmis sur la fréquence de contrôle F2 est donc la suivante :
C2 - - - - C3 - - - - C4 - - - - C5 - - - - C6, etc.

Le réalisateur choisit ensuite la caméra C₂ "en direct", et les autres caméras vont donc transmettre une image par seconde repartie dans le temps sur la fréquence de contrôle.

On comprend ainsi qu'il est également possible de transmettre toutes les images des caméras sur une seule fréquence, en supprimant périodiquement une image provenant de la caméra "en direct" et en remplaçant cette image par une image provenant de l'une des autres caméras.

Dès qu'un signal de commande est reçu et interprété, il prépositionne un circuit logique qui enclenchera l'émetteur dès la fin de l'image en cours. Cette commande s'exécute de façon synchrone et ne perturbe pas la répartition des images transmises sur la fréquence de contrôle.

Le signal de commande peut comporter un code d'identification, suivi d'une commande d'enclenchement de l'émetteur HFE et suivi éventuellement d'un ou de plusieurs ordres et d'éventuelles informations. Par exemple, si le système selon l'invention comprend six caméras, l'une d'entre elles, par exemple la caméra C₁, recevra la commande de transmettre en direct sur la fréquence F1, tandis que les autres caméras recevront périodiquement un signal de commande qui leur fait transmettre une image sur la fréquence de contrôle F2.

Le signal de commande généré par l'unité de commande UC et transmis par la liaison RL peut être composé comme suit :
(idCᵢ "enclencher" "en direct" F1) (idCⱼ "enclencher" "image" F2)
avec
- idCᵢ =: code d'identification caméra Cᵢ; (i=1),
- idCⱼ =: code d'identification caméra Cⱼ(j=2,3,4,5,6);
- "enclencher" =: ordre de transmission;
- "en direct" =: ordre mode en direct;
- "image" =: ordre mode de contrôle
- F1, F2 =: fréquences sur lesquelles les caméras Cᵢ et Cⱼ doivent transmettre

La suite des signaux de commande correspondante à l'exemple précédent peut être composée comme suit :
(idC₁ "enclencher" "en direct" F1) (idC₂ "enclencher" " image" F2)
(idC₁ "enclencher" "en direct" F1) (idC₃ "enclencher" " image" F2)
(idC₁ "enclencher" "en direct" F1) (idC₄ "enclencher" " image" F2)
(idC₁ "enclencher" "en direct" F1) (idC₅ "enclencher" " image" F2)
(idC₁ "enclencher" "en direct" F1) (idC₆ "enclencher" " image" F2)
(idC₁ "enclencher" ...etc...

Le signal de commande est donc transmis périodiquement pour maintenir le ou les émetteurs enclenchés. Donc, si pour une raison quelconque, la liaison entre la station de production S et une ou plusieurs caméras du système venait à être interrompue, le ou les émetteurs desdites caméras cessent de transmettre. Les caméras attendent alors un nouveau signal de commande. La durée de ce signal de commande R émis par l'unité de contrôle UC dépend de son contenu (voir figure 2f). On comprend donc que la durée maximale de ce signal de commande dépend des normes utilisées. Etant donné qu'une image télévisée comporte X images par seconde, la durée maximale d'un tel signal de commande doit donc dans tous les cas être inférieure à 1/X secondes.

Grâce à la validation continuelle du fonctionnement de l'émetteur HFE de chaque caméra du système selon l'invention, l'utilisation du spectre des fréquences est réduite au stricte nécessaire. En effet, lors d'un non-réception du signal de commande de l'unité de contrôle UC, chaque caméra cesse de transmettre au plus tard après la durée de l'image en cours. Ainsi, par cette coupure automatique, une occupation inutile, et donc une pollution du spectre par des caméras parasites, est évitée. De ce faite, si la caméra sort du champ de réception du signal de commande, par exemple en entrant dans un tunnel, et ne peut plus capter ce signal de commande, son émetteur HFE s'éteint également rapidement pour ainsi éviter une pollution du spectre des fréquences.

On peut également prévoir dans l'unité de commande UC un contrôle de fonctionnement spécifique des caméras, comme par exemple le "tally" (terme anglais utilisé couramment pour indiquer la lampe de signalisation), la brillance de l'image, le diaphragme désiré etc. Comme un signal de commande est transmis à chaque image, un contrôle continuel du fonctionnement est ainsi possible.

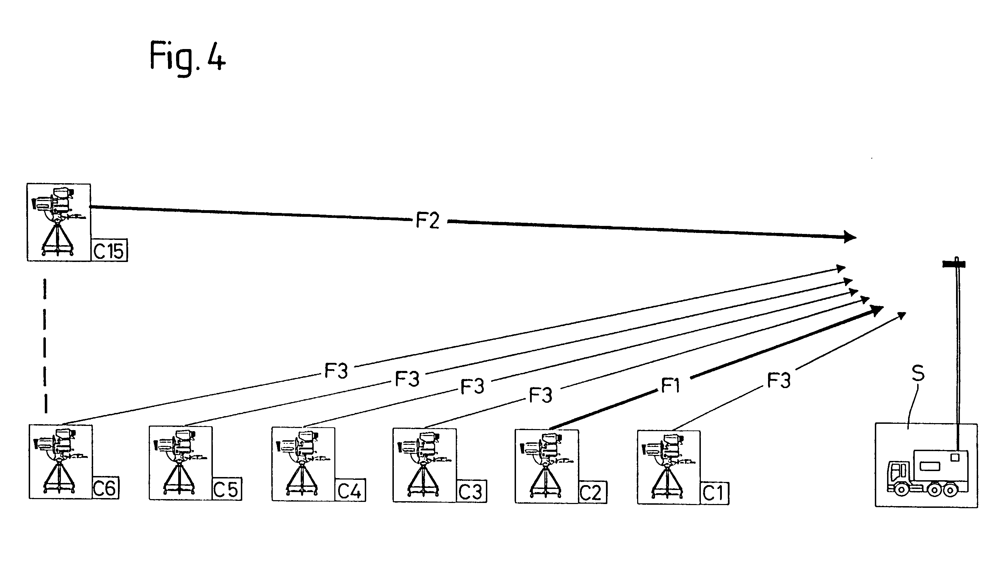

On va décrire ci-après à l'aide de la figure 4 un exemple d'une configuration pratique réalisable avec le système selon l'invention. L'exemple concerne la réalisation d'un programme de télévision, en vue de sa diffusion en direct, couvrant un événement sportif impliquant des participants qui se suivent, le premier participant étant suivi d'un second etc., comme c'est le cas par exemple lors d'un tournoi de golf ou d'une descente de ski alpin.

On prévoit quinze caméras H.F. C₁, C₂, ... C₁₅ pour suivre l'événement et pour transmettre leurs prises de vues vers une unité de régie ou station de production S. Il est souhaitable que toutes les caméras soient visualisées dans la régie finale afin de permettre au réalisateur d'avoir une vision globale des événements. Dans le cas des installations de la technique antérieure, on aurait alors besoin de quinze fréquences.

Dans l'exemple de la figure 4, la caméra C2 transmet en direct sur la fréquence F1. Eventuellement, dans le cas où on a trois fréquences F1, F2, F3 allouées par l'autorité concédante, on peut transmettre en direct une deuxième prise de vues, dans l'exemple celle de la caméra C₁₅, sur la deuxième fréquence F2, tandis que les prises de vues des autres caméras, ici donc C₁, C₃ à C₁₄, sont multiplexées et transmises sur la fréquence de contrôle F3. Ainsi, toutes les caméras peuvent être visualisées dans la régie finale.

## Revendications

1. Système de transmission à haute fréquence d'images de télévision comprenant :
- au moins trois unités de prise de vues (Cᵢ) comportant chacune une caméra et un module (MDᵢ) comprenant un récepteur (HFR) d'ondes hertziennes et un émetteur à haute fréquence (HFE) pouvant émettre par des ondes hertziennes un signal de prise de vues fourni par ladite caméra vers une unité de régie (S) capable de communiquer avec un réseau de télédiffusion pour diffuser en direct et/ou d'enregistrer au moins un desdits signaux,
- deux canaux vidéo hertziens permettant respectivement la transmission sur une première et une deuxième fréquence porteuse prédéterminée (F1, F2) d'un signal vidéo représentant un nombre déterminé d'images (X) par seconde, lesdits canaux reliant lesdites unités de prise de vues à ladite unité de régie (S),
ladite unité de régie comprenant une unité de commande (UC) comprenant des moyens (RL) pour établir une liaison par ondes hertziennes avec lesdits récepteurs (HFR) desdites unités de prise de vues (Cᵢ), le système étant **caractérisé en ce que**
lesdits moyens de liaison (RL) sont agencés de sorte qu'ils peuvent transmettre un signal radio de commande auxdites unités de prise de vues pour télécommander le fonctionnement desdites unités de prise de vues, de leurs émetteurs et de leurs récepteurs et pour contrôler l'attribution desdits canaux auxdites unités de prise de vues de manière qu'un desdits canaux transmet, sur une desdites fréquences porteuses (F1, F2), un premier signal vidéo constitué par un signal engendré sur la base d'une prise de vues réalisée par une unité de prise de vues sélectionnée, tandis que l'autre desdits canaux transmet, sur l'autre desdites fréquences porteuses, un deuxième signal vidéo formé par multiplexage temporel de signaux engendrés sur la base de prises de vues réalisées par d'autres unités de prise de vues, et **en ce que** ladite unité de commande (UC) transmet ledit signal radio de commande auxdites unités de prises de vues (Cᵢ) pour chaque image de manière à valider image par image le fonctionnement de leurs modules (MDᵢ) et l'enclenchement de leurs émetteurs (HFE).

2. Système selon la revendication 1, **caractérisé en ce que** chaque unité de prises de vues (Cᵢ) comprend en outre une unité d'asservissement lui permettant de synchroniser son signal de sortie avec le signal radio de commande transmis par ladite unité de régie (S).

3. Système selon l'une quelconque des revendications précédentes, **caractérisé en ce qu'**il comporte en outre des moyens (UC, S1) pour sélectionner la fréquence porteuse (F1, F2) de transmission du signal engendré sur la base de prise de vues de chacune desdites unités de prise de vues (Cᵢ).

4. Procédé de transmission de prises de vues mis en oeuvre par un système selon l'une quelconque des revendications précédentes, comprenant les étapes suivantes :
- établir une liaison par signal radio entre une unité de régie et lesdites unités de prise de vues afin de sélectionner une desdites unités de prise de vues pour transmettre, sur un desdits canaux, un signal engendré sur la base de prise de vues réalisées par une desdites unités de prise de vues, et de commander à chacune des autres unités des prise de vues la transmission en multiplexage temporel sur l'autre canal vidéo des signaux représentant une image,
- valider image par image le fonctionnement des modules des unités de prise de vues et l'enclenchement de leurs émetteurs pouvant émettre par des ondes hertziennes un signal engendré sur la base de prise de vues fourni par une caméra vers une unité de régie.

5. Procédé de transmission de prises de vues selon la revendication 4, **caractérisé en ce qu'**il comprend encore l'étape suivante
- transmettre sur ledit autre canal vidéo un nombre déterminé d'images (X) de prises de vues, ce nombre d'images (X) consistant en un nombre d'images provenant d'une desdites autres unités de prise de vues, et étant supérieur au nombre d'images provenant des autres desdites autres unités de prise de vues.

6. Procédé de transmission de prises de vues selon la revendication 4, **caractérisé en ce qu'**il comprend en outre l'étape suivante
- transmettre sur ledit autre canal vidéo un nombre déterminé d'images (X) de prises de vues, ce nombre d'images (X) consistant en un nombre d'images provenant d'au moins deux desdites autres unités de prise de vues, et étant supérieur au nombre d'images provenant des autres desdites autres unités de prise de vues.

## Claims

1. High frequency television image transmission system comprising:
- at least three shooting units (Cᵢ) each comprising a camera and a module (MDᵢ) comprising a radio wave receiver (HFR) and a high frequency transmitter (HFE) able to transmit via radio waves a shot signal provided by said camera to a central production unit (S) capable of communicating with a television network for broadcasting live and/or recording at least one of said signals,
- two hertzian video channels allowing respectively the transmission on a first and a second predetermined carrier frequency (F1, F2) of a video signal representing a determined number of images (X) per second, said channels linking said shooting units to said central production unit (S),
said central production unit comprising a control unit (UC) comprising means (RL) for establishing a radio wave link with said receivers (HFR) of said shooting units (Ci), the system being **characterized in that**
said linking means (RL) are arranged so that they can transmit a control radio signal to said shooting units for remote controlling the operation of said shooting units, their transmitters and their receivers and for controlling the assignment of said channels to said shooting units so that one of said channels transmits, on one of said carrier frequencies (F1, F2), a first video signal formed by a signal generated on the basis of a shot realized by a selected shooting unit, while the other of said channels transmits, on the other of said' carrier frequencies, a second video signal formed by temporal multiplexing of the signals generated on the basis of shots realized by other shooting units, and **in that** said control unit (UC) transmits said control radio signal to said shooting units (Cᵢ) for each image so as to validate, image by image, the operation of their modules (MDᵢ) and the turning on'of their transmitters (HFE).

2. System according to claim 1, **characterized in that** each shooting unit (Cᵢ) further comprises a closed loop control unit enabling it to synchronise its output signal with the control radio signal transmitted by said central production unit (S).

3. System according to any one of the preceding claims, **characterized in that** it further comprises means (UC, S1) for selecting the carrier transmission frequency (F1, F2) of the signal generated on the basis of shots from each of said shooting units (Cᵢ).

4. Shot transmission method implemented via a system according to any of the preceding claims, comprising the following steps:
- establishing a radio signal link between a central production unit and said shooting units in order to select one of said shooting units to transmit, on one of said channels, a signal generated on the basis of shots realized by one of said shooting units, and to instruct each of the other shooting units to transmit by temporal multiplexing on the other video channel signals representing an image,
- validating image by image the module operation of the shooting units and the turning on of their transmitters able to transmit via radio waves a signal generated on the basis of shots provided by a camera to a central production unit.

5. Shot transmission method according to claim 4, **characterized in that** it also comprises the following step:
- transmitting on said other video channel a determined number of shot images (X), such number of images (X) consisting of a number of images coming from one of said other shooting units, and being greater than the number of images coming from the other of said other shooting units.

6. Shot transmission method according to claim 4, **characterized in that** it comprises in addition the following step:
- transmitting on said other video channel a determined number of shot images (X), such number of images (X) consisting of a number of images coming from at least two of said other shooting units, and being greater than the number of images coming from the other of said other shooting units.

## Patentansprüche

1. Hochfrequenz-Übertragungssystem für Fernsehbilder, das umfaßt:
- wenigstens drei Bildaufnahmeeinheiten (Cᵢ), wovon jede eine Kamera und ein Modul (MDᵢ) enthält, das einen Funkwellenempfänger (HFR) und einen Hochfrequenzsender (HFE), der über die Funkwellen ein von der Kamera geliefertes Bildaufnahmesignal zu einer Regieeinheit (S) senden kann, aufweist, wobei die Regieeinheit (S) mit einem Fernsehfunknetz kommunizieren kann, um wenigstens eines der Signale direkt auszustrahlen und/oder aufzuzeichnen,
- zwei Funkvideokanäle, die auf einer ersten bzw. einer zweiten vorgegebenen Trägerfrequenz (F1, F2) das Senden eines Videosignals, das eine bestimmte Anzahl (X) von Bildern pro Sekunde repräsentiert, ermöglichen und die Bildaufnahmeeinheiten mit der Regieeinheit (S) verbinden,
wobei die Regieeinheit eine Steuereinheit (UC) umfaßt, die Mittel (RL) für den Aufbau einer Verbindung über Funkwellen mit den Empfängern (HFR) der Bildaufnahmeeinheiten (Cᵢ) enthält, wobei das System **dadurch gekennzeichnet ist, daß**
die Verbindungsmittel (RL) so beschaffen sind, daß sie ein Steuerfunksignal an die Bildaufnahmeeinheiten senden können, um den Betrieb dieser Bildaufnahmeeinheiten, ihrer Sender und ihrer Empfänger fernzusteuern und um die Zuweisung dieser Kanäle zu den Bildaufnahmeeinheiten so zu steuern, daß einer der Kanäle auf einer der Trägerfrequenzen (F1, F2) ein erstes Videosignal sendet, das aus einem Signal gebildet ist, das anhand einer Aufnahme erzeugt wird, die durch eine ausgewählte Bildaufnahmeeinheit ausgeführt wird, und daß der andere der Kanäle auf der anderen der Trägerfrequenzen ein zweites Videosignal sendet, das durch zeitliche Multiplexierung der Signale gebildet ist, die anhand der Aufnahmen erzeugt werden, die durch die anderen Bildaufnahmeeinheiten ausgeführt werden, und daß die Steuereinheit (UC) das Steuerfunksignal für jedes Bild an die Bildaufnahmeeinheiten (Cᵢ) sendet, um den Betrieb ihrer Module(MDᵢ) und das Starten ihrer Sender(HFE) Bild für Bild zu validieren.

2. System nach Anspruch 1, **dadurch gekennzeichnet, daß** jede Bildaufnahmeeinheit (Cᵢ) außerdem eine Regelungseinheit umfaßt, die ihr die Synchronisation ihres Ausgangssignals mit dem von der Regieeinheit (S) gesendeten Steuerfunksignal ermöglicht.

3. System nach einem der vorhergehenden Ansprüche, **dadurch gekennzeichnet, daß** es außerdem Mittel (UC, S1) für die Auswahl der Trägerfrequenz (F1, F2) zum Senden des anhand der Aufnahmen jeder der Bildaufnahmeeinheiten (Cᵢ) erzeugten Signals umfaßt.

4. Verfahren zum Senden von Aufnahmen, das durch ein System nach einem der vorhergehenden Ansprüche ausgeführt wird und die folgenden Schritte umfaßt:
- Aufbauen einer Funksignalverbindung zwischen einer Regieeinheit und den Bildaufnahmeeinheiten, um eine der Bildaufnahmeeinheiten auszuwählen, um auf einem der Kanäle ein Signal zu senden, das anhand der durch eine der Bildaufnahmeeinheiten ausgeführten Aufnahmen erzeugt wird, und um bei jeder der anderen Bildaufnahmeeinheiten das Senden der ein Bild repräsentierenden Signale im zeitlichem Multiplex auf einem weiteren Videokanal zu steuern,
- Bild für Bild Validieren des Betriebs der Module der Bildaufnahmeeinheiten und des Startens ihrer Sender der über Funkwellen ein Signal, das anhand der von einer Kamera gelieferten Bildaufnahmen erzeugt wird, an eine Regieeinheit senden kann.

5. Verfahren zum Senden von Bildaufnahmen nach Anspruch 4, **dadurch gekennzeichnet, daß** es außerdem den folgenden Schritt umfaßt:
- Senden einer bestimmten Anzahl (X) von aufgenommenen Bildern auf dem anderen Videokanal, wobei diese Anzahl (X) von Bildern aus einer Anzahl von Bildern besteht, die von einer der Bildaufnahmeeinheiten stammen, wobei die Anzahl größer als die Anzahl von Bildern ist, die von den anderen der Bildaufnahmeeinheiten stammen.

6. Verfahren zum Senden von Bildaufnahmen nach Anspruch 4, **dadurch gekennzeichnet, daß** es außerdem den folgenden Schritt umfaßt:
- Senden einer bestimmten Anzahl (X) von aufgenommenen Bildern auf dem anderen Videokanal, wobei diese Anzahl (X) von Bildern aus einer Anzahl von Bildern besteht, die von wenigstens zwei der anderen Bildaufnahmeeinheiten stammen, wobei diese Anzahl größer als die Anzahl von Bildern ist, die von den anderen der anderen Bildaufnahmeeinheiten stammen.
